# EUROPÄISCHE PATENTSCHRIFT

(11) **EP 1 163 511 B1**
(45) Veröffentlichungstag und Bekanntmachung des Hinweises auf die Patenterteilung: **21.01.2004**
(21) Anmeldenummer: 00916810.5
(22) Anmeldetag: 10.03.2000
(51) Int. Cl.: G01N 27/417

(54) **ELEKTROCHEMISCHER GASSENSOR**
ELECTROCHEMICAL GAS SENSOR
DETECTEUR ELECTROCHIMIQUE DE GAZ

(30) Priorität: 18.03.1999 DE 19912100
(43) Veröffentlichungstag der Anmeldung: 19.12.2001
(73) Patentinhaber: ROBERT BOSCH GMBH, 70442 Stuttgart (DE)
(72) Erfinder: STANGLMEIER, Frank, D-71696 Moeglingen (DE); SCHUMANN, Bernd, D-71277 Rutesheim (DE); MOSER, Thomas, D-71701 Schwieberdingen (US)
(86) Internationale Anmeldenummer: PCT/DE2000/000754
(87) Internationale Veröffentlichungsnummer: WO 2000/057168

(56) Entgegenhaltungen:
- EP-A- 0 791 828
- EP-A- 0 831 322
- DE-A- 2 304 464

## Beschreibung

Die Erfindung betrifft einen elektrochemischen Gassensor zur Bestimmung der Konzentration von oxidierbaren Gaskomponenten in Gasgemischen nach dem Oberbegriff des Anspruchs 1.

### Stand der Technik

Aus der DE-OS 23 04 464 ist ein elektrochemischer Gassensor bekannt, bei dem eine die Gleichgewichtseinstellung des Gasgemisches nicht katalysierende Elektrode aus Gold oder Silber vorgesehen ist, die mit einer die Gleichgewichtseinstellung des Meßgases katalysierenden Elektrode aus Platin zusammenwirkt. Die katalytisch inaktiven Elektrodenmaterialien bewirken, daß an der Elektrode zwischen dem Sauerstoff und den oxidierbaren bzw. reduzierbaren Gaskomponenten eine Konkurrenzreaktion stattfindet. Dadurch wird selbst bei eingeregelten hohen Lambda-Werten der im Meßgas mitgeführte freie Sauerstoff mit beispielsweise C₃H₆ oder CO kaum umgesetzt, so daß sowohl freier Sauerstoff wie auch C₃H₆ bzw. CO die Drei-Phasen-Grenze an der katalytisch inaktiven Elektrode erreichen. Ein derartiger Gassensor besitzt jedoch einen erhebliche Querempfindlichkeit gegenüber dem im Gasgemisch ebenfalls vorhandenen Sauerstoff.

EP 0 831 322 offenbart einen Gassensor, der zur Bestimmung der Konzentration von oxidierbaren Gaskomponenten in Gasgemischen geeignet ist, der eine elektrochemische Messzelle mit einer Messelektrode und einer Referenzelektrode aufweist, wobei die Messelektrode aus einem Material ausgeführt ist, das die Gasgleichgewichtseinstellung nicht oder nicht vollständig zu katalysieren vermag, wobei zusätzlich mindestens eine elektrochemische Pumpzelle mit zumindest einer inneren Pumpelektrode vorgesehen ist, die zusammen mit der Messelektrode in einem Messgasraum angeordnet ist, wobei die Pumpzelle mit einer Schaltanordnung verbunden ist, die Sauerstoff aus dem Messgasraum heraus pumpt.

### Vorteile der Erfindung

Der erfindungsgemäße Gassensor mit den kennzeichnenden Merkmalen des Anspruchs 1 hat den Vorteil, daß durch das Zupumpen von Sauerstoff die Querempfindlichkeit gegenüber Sauerstoff reduziert werden kann. Ein weiterer Vorteil besteht darin, daß ein fertigungstechnisch ausgereiftes Basissensorelement genutzt werden kann, das lediglich durch eine Modifizierung der Elektroden verändert werden muß. Als Basissensorelement dient ein sogenannter Breitbandsensor zur Bestimmung der Sauerstoffkonzentration, der aus einer Pumpzelle und einer Konzentrationszelle (Meßzelle) besteht, wobei ein Mischpotentialsensor mit vorgeschalteter Sauerstoff-Pumpzelle gebildet wird. Die Verwendung des fertigungstechnisch ausgereiften Basissensorelements bietet erhebliche Kostenvorteile gegenüber einem für jeden Anwendungsfall spezialisierten Sensorelementaufbau.

Durch die in den Unteransprüchen aufgeführten Maßnahmen sind vorteilhafte Weiterbildungen und Verbesserungen des im Hauptanspruch angegebenen Sensorelements möglich. Die Querempfindlichkeit gegenüber Sauerstoff ist weitestgehend dadurch zu reduzieren, wenn der über die Pumpzelle im Meßgasraum einstellbare Sauerstoffpartialdruck einem Lambda-Wert von ≥ 1,3 aufweist.

### Zeichnung

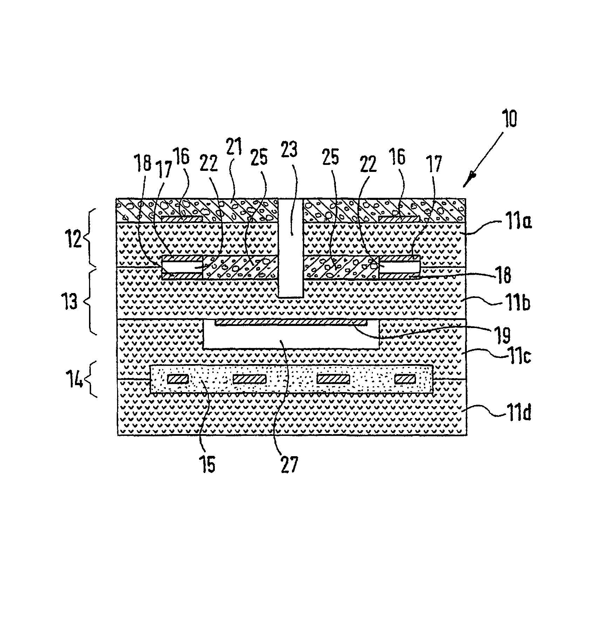

Ein Ausführungsbeispiel der Erfindung ist in der Zeichnung dargestellt und in der nachfolgenden Beschreibung näher erläutert. Die Figur zeigt einen Querschnitt durch ein Sensorelement eines erfindungsgemäßen Gassensors.

### Ausführungsbeispiel

Die Figur zeigt ein planares Sensorelement 10 eines elektrochemischen Gassensors, das beispielsweise eine Mehrzahl von sauerstoffionenleitenden Festelektrolytträgerschichten 11a, 11b, 11c und 11d aufweist. Die Festelektrolytträgerschichten 11a bis 11d werden dabei als keramische Folien ausgeführt und bilden nach dem Sintern einen planaren keramischen Körper aus. Die integrierte Form des planaren keramischen Körpers wird durch Zusammenlaminieren der mit Funktionsschichten bedruckten keramischen Folien und anschließendem Sintern der laminierten Struktur in an sich bekannter Weise hergestellt. Jede der Festelektrolytträgerschichten 11a bis 11d ist aus sauerstoffionenleitendem Festelektrolytmaterial, wie beispielsweise mit Y₂O₃ stabilisiertem ZrO₂ ausgeführt.

Das Sensorelement 10 weist eine elektrochemische Pumpzelle 12 und eine elektrochemische Meßzelle 13 (Konzentrationszelle) sowie einen Widerstandsheizer 14 auf. Der Widerstandsheizer 14 ist zwischen den Festelektrolytträgerschichten 11c und 11d angeordnet und in eine elektrische Isolation 15 aus beispielsweise Al₂O₃ eingebettet. Mittels des Widerstandsheizers 14 wird das Sensorelement 10 auf die entsprechende Betriebstemperatur von beispielsweise 500°C erhitzt.

Die Pumpzelle 12 besitzt eine äußere Pumpelektrode 16 und eine innere Pumpelektrode 17. Die Meßzelle 13 ist mit einer Meßelektrode 18 und einer Referenzelektrode 19 ausgeführt. Die äußere Pumpelektrode 16 ist mit einer porösen Schutzschicht 21 abgedeckt und dem Meßgas ausgesetzt. Die innere Pumpelektrode 17 der Pumpzelle 12 und die Meßelektrode 18 der Meßzelle 13 befinden sich gegenüberliegend in einem Meßgasraum 22, der über ein Gaszutrittsloch 23 mit dem Meßgas in Verbindung steht. Die Referenzelektrode 19 befindet sich in einem Referenzgaskanal, der mit einem Referenzgas, beispielsweise Luft in Verbindung steht.

In Diffusionsrichtung des Meßgases ist innerhalb des Meßgasraums 22 der inneren Pumpelektrode 17 und der Meßelektrode 18 eine poröse Diffusionsbarriere 25 vorgelagert. Die poröse Diffusionsbarriere 25 bildet einen Diffusionswiderstand bezüglich des zu den Elektroden 17, 18 diffusierenden Gases aus.

Der beschriebene Aufbau des Sensorelements 10 entspricht einem sogenannten Breitbandsensor zur Bestimmung des LambdaWertes in Gasgemischen von λ < 1 bis λ > 1. Bei dem Breitbandsensor sind alle Elektroden aus einem die Gleichgewichtseinstellung des Gasgemisches katalysierenden Material, beispielsweise Platin bzw. einem Platin-Cermet-Material ausgeführt.

Bei dem Gassensor der vorliegenden Erfindung, der auf oxidierbare Gase, wie beispielsweise HC, H₂, CO und NH₃ anspricht, ist im Unterschied zu dem besagten Breitbandsensor zumindest die im Meßgasraum 22 angeordnete Meßelektrode 18 aus einem Material ausgeführt, das die Gleichgewichtseinstellung des Gasgemisches nicht oder nicht vollständig zu katalysieren vermag. Ein derartiges Material ist beispielsweise Gold oder eine Gold-Platin-Legierung, wobei der Goldanteil in der Platin/Gold-Legierung 0,5 bis 20 Gew.-%, vorzugsweise 10 Gew.-% beträgt. Diese Materialien gewährleisten, daß die im Meßgasraum 22 angeordneten Meßelektroden 18 selektiv gegenüber den im Gasgemisch enthaltenen oxidierbaren Gaskomponenten ist.

Zweckmäßig ist, zusätzlich zu der Meßelektrode 18 auch die weitere im Meßgasraum 22 angeordnete innere Pumpelektrode 17 ebenfalls aus einem Material auszuführen, das die Gleichgewichtseinstellung des Gasgemisches nicht oder nicht vollständig zu katalysieren vermag. Die innere Pumpelektrode 17 enthält eine Platin/Gold-Legierung mit einem Goldanteil von 0,1 bis 3 Gew.-%, vorzugsweise von 0,3 bis 0,8 Gew.-%.

Eine weitere Anforderung besteht darin, daß die Materialien ko-sinterfähig sind, d.h., daß sie den zum Sintern der Festelektrolytträgerschichten 11a bis 11d erforderlichen Sintertemperaturen von beispielsweise 1400°C standhalten. Zur Herstellung eines festen Schichtverbundes zwischen Festelektolytträgerschichten 11a bis 11d und den Elektroden 17, 18 sind diese, wie die Elektroden 16, 19, aus einem Cermet-Material ausgeführt. Derartige Cermet-Elektroden enthalten neben dem katalytisch aktiven Platin bzw. dem katalytisch inaktiven Gold oder der Platin/Gold-Legierung einen keramischen Anteil, der in vorteilhafterweise dem Material der angrenzenden Festelektrolytträgerschichten 11a bis 11d entspricht.

Bei der Betriebsweise des Gassensors wird an die Pumpelektroden 16, 17 eine Pumpspannung angelegt, die je nach Sauerstoffpartialdruck im Meßgas so gepolt ist, daß bei hohem Sauerstoffpartialdruck im Abgas Sauerstoff aus dem Meßgasraum 22 heraus und bei niedrigem Sauerstoffpartialdruck im Meßgas Sauerstoff in den Meßgasraum 22 hineingepumpt wird. Dazu ist eine entsprechende Schaltungsanordnung vorgesehen, die außerdem gewährleistet, daß im Meßgasraum 22 ein im wesentlicher konstanter Sauerstoffpartialdruck aufrechterhalten wird.

Untersuchungen haben ergeben, daß die Querempfindlichkeit des Sensors bezüglich Sauerstoff dann gering ist, wenn im Meßgasraum 22, d.h. an der Meßelektrode 18 ein Sauerstoffpartialdruck von λ ≥ 1,3 vorliegt. Es wurde festgestellt, daß ab einem Sauerstoffpartialdruck von λ ≥ 1,3 der Einfluß der Sauerstoffkonzentration auf das Meßergebnis zur Bestimmung der Konzentration von Kohlenwasserstoffen vernachlässigbar ist. Wesentlich für die Betriebsweise des Gassensors zur Bestimmung von Kohlenwasserstoffen ist, daß die Meßelektrode 18 eine sogenannte Mischpotentialelektrode ist, die keine oder zumindest keine vollständige Gleichgewichtseinstellung des Gasgemisches katalysiert. Zusammen mit der im Referenzgaskanal 27 angeordneten Referenzelektrode 19 bildet die Meßelektrode 18 einen sogenannten Mischpotentialsensor aus, der insbesondere zur Bestimmung von Kohlenwasserstoffen verwendet wird.

Das die Gleichgewichtseinstellung des Gasgemisches nicht oder nicht vollständig katalysierende Material der Meßelektrode 18 bewirkt, daß an der Meßelektrode 18 zwischen dem im Gasgemisch enthaltenen Sauerstoff und den reduzierten Gaskomponenten eine Konkurrenzreaktion stattfindet, wobei die im Meßgas mitgeführten Kohlenwasserstoffe mit dem freien Sauerstoff kaum umgesetzt werden. Bei einer katalytisch aktiven Elektrode würde eine Reaktion der Kohlenwasserstoffe mit dem Sauerstoff stattfinden. Dies jedoch zu vermeiden ist das Ziel der nicht katalytisch aktiven Mischpotentialelektrode. Folglich gelangen sowohl der freie Sauerstoff als auch die Kohlenwasserstoffe an die 3-Phasen-Grenze der Meßelektrode 18. An der Referenzelektrode 19 hingegen liegt mit der Referenzluft ein konstant hoher Sauerstoffpartialdruck an.

An der Meßelektrode 18 reagieren nun die adsorbierten Kohlenwasserstoffe und es bildet sich ein Potentialunterschied zwischen der Meßelektrode 18 und der Referenzelektrode 19 aus, der als EMK von einem nicht dargestellten Meßinstrument abgegriffen werden kann. Die EMK ist somit abhängig von der Konzentration der im Gasgemisch enthaltenen Kohlenwasserstoffe. Bei einer hohen Konzentration von Kohlenwasserstoffen liegt ein hoher Potentialunterschied und damit eine hohe EMK vor. Bei einer niedrigen Konzentration an Kohlenwasserstoffen ist der Potentialunterschied zwischen der Meßelektrode 22 und der Referenzelektrode 19 geringer und damit ist auch die hervorgerufene EMK niedriger.

## Patentansprüche

1. Vorrichtung zur Bestimmung der Konzentration von oxidierbaren Gaskomponenten in Gasgemischen, mit einem elektrochemischen Gassensor, der eine elektrochemische Meßzelle (13) mit einer Meßelektrode (18) und einer Referenzelektrode (19) aufweist, wobei die Meßelektrode (18) aus einem Material ausgeführt ist, das die Gasgleichgewichtseinstellung nicht oder nicht vollständig zu katalysieren vermag, und wobei zusätzlich mindestens eine elektrochemische Pumpzelle (12) mit zumindest einer inneren Pumpelektrode (17) vorgesehen ist, die zusammen mit der Meßelektrode (18) in einem Meßgasraum (22) angeordnet ist, wobei die Pumpzelle mit einer Schaltungsanordnung verbunden ist, die an die Pumpzelle eine Pumpspannung anlegt, so daß die Pumpzelle (12) Sauerstoff in den Meßgasraum (22) hinein oder heraus pumpt, **dadurch gekennzeichnet, daß** die Schaltungsanordnung derart eine Pumpspannung an die Pumpzelle (12) anlegt, daß der Sauerstoffpartialdruck im Meßgasraum (22) einem Lambda-Wert von ≥ 1,3 entspricht.

2. Vorrichtung nach Anspruch 1, **dadurch gekennzeichnet, daß** mittels der Pumpzelle (12) im Meßgasraum (22) ein zumindest annähernd konstanter Sauerstoffpartialdruck einstellbar ist.

3. Vorrichtung nach Anspruch 1, **dadurch gekennzeichnet, daß** die Meßelektrode (18) und die innere Pumpelektrode (17) im Meßgasraum (22) gegenüberliegend angeordnet sind.

4. Vorrichtung nach Anspruch 1 oder 3, **dadurch gekennzeichnet, daß** die Meßelektrode (18) Gold oder eine Platin/Gold-Legierung enthält.

5. Vorrichtung nach Anspruch 4, **dadurch gekennzeichnet, daß** der Goldanteil in der Platin/Gold-Legierung der Meßelektrode (18) 0,5 bis 20 Gew.-%, vorzugsweise 10 Gew.-% beträgt.

6. Vorrichtung nach Anspruch 1 oder 3, **dadurch gekennzeichnet, daß** zusätzlich zur Meßelektrode (18) die innere Pumpelektrode (17) aus einem Material ausgeführt ist, das die Gasgleichgewichtseinstellung nicht oder nicht vollständig zu katalysieren vermag.

7. Vorrichtung nach Anspruch 6, **dadurch gekennzeichnet, daß** die innere Pumpelektrode (17) eine Platin/Gold-Legierung mit einem Goldanteil von 0,1 bis 3 Gew.-%, vorzugsweise von 0,3 bis 0,8 Gew.-% enthält.

8. Vorrichtung nach Anspruch 1, **dadurch gekennzeichnet, daß** die Referenzelektrode (19) aus einem Material besteht, das die Gasgleichgewichtseinstellung zu katalysieren vermag.

9. Vorrichtung nach Anspruch 8, **dadurch gekennzeichnet, daß** das katalytisch aktive Material Platin ist.

10. Vorrichtung nach Anspruch 1, **dadurch gekennzeichnet, daß** der Meßgasraum (22) in einer Schichtebene angeordnet ist und daß zu dem Meßgasraum (22) ein Gaszutrittsloch (23) führt.

11. Verfahren zum Betreiben eines elektrochemischen Gassensors zur Bestimmung der Konzentration von oxidierbaren Gaskomponenten in Gasgemischen, wobei der Gassensor eine elektrochemische Meßzelle (13) mit einer Meßelektrode (18) und einer Referenzelektrode (19) aufweist, wobei die Meßelektrode (18) aus einem Material ausgeführt ist, das die Gasgleichgewichtseinstellung nicht oder nicht vollständig zu katalysieren vermag, wobei zusätzlich mindestens eine elektrochemische Pumpzelle (12) mit zumindest einer inneren Pumpelektrode (17) vorgesehen ist, die zusammen mit der Meßelektrode (18) in einem Meßgasraum (22) angeordnet ist, und wobei eine Schaltungsanordnung vorgesehen ist, durch die eine Pumpspannung derart an die Pumpzelle (12) angelegt wird, dass Sauerstoff in den Meßgasraum (22) hinein oder heraus gepumpt wird, **dadurch gekennzeichnet, daß** durch die Schaltungsanordnung im Meßgasraum ein Sauerstoffpartialdruck eingestellt wird, der einem Lambda-Wert von ≥ 1,3 entspricht.

## Claims

1. Device for determining the concentration of oxidizable gas components in gas mixtures, having an electrochemical gas sensor which includes an electrochemical measuring cell (13) having a measuring electrode (18) and a reference electrode (19), the measuring electrode (18) being made from a material which is unable to catalyse or completely catalyse the establishment of gas equilibrium, and in addition at least one electrochemical pump cell (12) with at least one inner pump electrode (17) being provided which, together with the measuring electrode (18), is arranged in a measurement gas space (22), the pump cell being connected to a circuit arrangement which applies a pump voltage to the pump cell, so that the pump cell (12) pumps oxygen into or out of the measurement gas space (22), **characterized in that** the circuit arrangement applies a pump voltage to the pump cell (12) in such a manner that the oxygen partial pressure in the measurement gas space (22) corresponds to a lambda value of ≥ 1.3.

2. Device according to Claim 1, **characterized in that** an at least approximately constant oxygen partial pressure can be established in the measurement gas space (22) by means of the pump cell (12).

3. Device according to Claim 1, **characterized in that** the measuring electrode (18) and the inner pump electrode (17) are arranged opposite one another in the measurement gas space (22).

4. Device according to Claim 1 or 3, **characterized in that** the measuring electrode (18) contains gold or a platinum/gold alloy.

5. Device according to Claim 4, **characterized in that** the gold content in the platinum/gold alloy of the measuring electrode (18) amounts to 0.5 to 20% by weight, preferably 10% by weight.

6. Device according to Claim 1 or 3, **characterized in that**, in addition to the measuring electrode (18), the inner pump electrode (17) is made from a material which is unable to catalyse or completely catalyse the establishment of gas equilibrium.

7. Device according to Claim 6, **characterized in that** the inner pump electrode (17) contains a platinum/gold alloy with a gold content of 0.1 to 3% by weight, preferably of 0.3 to 0.8% by weight.

8. Device according to Claim 1, **characterized in that** the reference electrode (19) consists of a material which is able to catalyse the establishment of gas equilibrium.

9. Device according to Claim 8, **characterized in that** the catalytically active material is platinum.

10. Device according to Claim 1, **characterized in that** the measurement gas space (22) is arranged in a layer plane, and **in that** a gas inlet hole (23) leads to the measurement gas space (22).

11. Method for operating an electrochemical gas sensor for determining the concentration of oxidizable gas components in gas mixtures, the gas sensor having an electrochemical measuring cell (13) with a measuring electrode (18) and a reference electrode (19), the measuring electrode (18) being made from a material which is unable to catalyse or completely catalyse the establishment of gas equilibrium, and in addition at least one electrochemical pump cell (12) having at least one inner pump electrode (17) being provided, which, together with the measuring electrode (18), is arranged in a measurement gas space (22), and a circuit arrangement being provided, by means of which a pump voltage is applied to the pump cell (12) in such a manner that oxygen is pumped into or out of the measurement gas space (22), **characterized in that** the circuit arrangement is used to set an oxygen partial pressure which corresponds to a lambda value of ≥ 1.3 in the measurement gas space.

## Revendications

1. Dispositif pour déterminer la concentration de composants oxydables dans des mélanges gazeux, utilisant un détecteur électrochimique de gaz comprenant une cellule électrochimique de mesure (13) présentant une électrode de référence (19) et une électrode de mesure (18) faite d'un matériau qui ne permet pas, ou pas totalement, de catalyser le réglage d'équilibrage des gaz, avec de plus au moins une cellule électrochimique de pompage (12) qui contient une électrode interne de pompe (17) montée avec l'électrode de mesure (18) dans une chambre de mesure (22) et qui est reliée par un circuit de commutation à la cellule de pompage (12), de sorte qu'à celle-ci est appliquée une tension de pompe faisant que de l'oxygène est introduit ou retiré, dans la chambre de gaz de mesure (22), par la cellule de pompage (12),
**caractérisé en ce que**
le circuit de commutation applique à la cellule de pompage (12) une tension de pompe de manière que la pression partielle d'oxygène dans la chambre de gaz de mesure (22) correspond à une valeur λ ≥ 1,3.

2. Dispositif selon la revendication 1,
**caractérisé en ce qu'**
au moyen de la cellule de pompage (12), on peut régler dans la chambre de gaz de mesure (22) une pression partielle d'oxygène au moins à peu près constante.

3. Dispositif selon la revendication 1,
**caractérisé en ce que**
l'électrode de mesure (18) et l'électrode interne de pompe (17) sont disposées face à face dans la chambre de gaz de mesure (22).

4. Dispositif selon l'une quelconque des revendications 1 ou 3,
**caractérisé en ce que**
l'électrode de mesure (18) est en or ou en alliage platine-or.

5. Dispositif selon la revendication 4,
**caractérisé en ce que**
la teneur en or de l'alliage platine-or constituant l'électrode de mesure (18) est, en poids, de 0, 5 à 20 %, de préférence 10 %.

6. Dispositif selon l'une quelconque des revendications 1 ou 3,
**caractérisé en ce qu'**
en plus de l'électrode de mesure (18), l'électrode interne de pompe (17) est faite d'un matériau qui ne permet pas, ou pas complètement, de catalyser le réglage d'équilibrage des gaz.

7. Dispositif selon la revendication 6,
**caractérisé en ce que**
l'électrode interne de pompe (17) est en alliage platine-or dont la teneur pondérale en or est de 0,1 à 3 %, de préférence 0,3 à 0,8 %.

8. Dispositif selon la revendication 1,
**caractérisé en ce que**
l'électrode de référence (19) est faite d'un matériau qui permet de catalyser le réglage d'équilibrage des gaz.

9. Dispositif selon la revendication 8,
**caractérisé en ce que**
le matériau catalytiquement actif est du platine.

10. Dispositif selon la revendication 1,
**caractérisé en ce que**
la chambre de gaz de mesure (22) est disposée dans un plan de couche et un trou d'accès du gaz (23) conduit à cette chambre.

11. Procédé pour faire fonctionner un détecteur électrochimique de gaz servant à la détermination de la concentration de composants oxydables dans des mélanges gazeux, ce détecteur comprenant une cellule électrochimique de mesure (13) présentant une électrode de référence (19) et une électrode de mesure (18) faite d'un matériau qui ne permet pas, ou pas totalement, de catalyser le réglage d'équilibrage des gaz, avec de plus au moins une cellule électrochimique de pompage (12) qui contient une électrode interne de pompe (17) montée avec l'électrode de mesure (18) dans une chambre de mesure (22) et qui est reliée par un circuit de commutation à la cellule de pompage (12), de sorte qu'à celle-ci est appliquée une tension de pompe faisant que de l'oxygène est introduit ou retiré, dans la chambre de gaz de mesure (22), par la cellule de pompage (12),
**caractérisé en ce que**
dans la chambre de gaz de mesure, le dispositif de commutation règle une pression partielle d'oxygène qui correspond à une valeur λ ≥ 1,3.
